(19) Europäisches Patentamt
European Patent Office
Office européen des brevets

(11) **EP 4 769 993 A1**

(12) **EUROPEAN PATENT APPLICATION**
published in accordance with Art. 153(4) EPC

(43) Date of publication:
**01.07.2026 Bulletin 2026/27**

(21) Application number: **23961801.0**

(22) Date of filing: **19.12.2023**

(51) International Patent Classification (IPC):
*H04L 5/00* *(2006.01)*

(52) Cooperative Patent Classification (CPC):
**H04L 5/00**

(86) International application number:
**PCT/CN2023/139928**

(87) International publication number:
**WO 2025/129456 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHAO, Nande
Dongguan, Guangdong 523860 (CN)**

(74) Representative: **Grassi, Stefano
Bugnion S.p.A.
Viale Lancetti, 17
20158 Milano (IT)**

(54) **RECEIVING METHOD AND SENDING METHOD FOR PDCCH, DEVICE, AND STORAGE MEDIUM**

(57)    A receiving method and a sending method for a PDCCH, a device, and a storage medium, belonging to the technical field of mobile communications. The method is executed by a terminal device and comprises: on the basis of a candidate PDCCH set, receiving a PDCCH, the PDCCH corresponding to one candidate PDCCH or a plurality of candidate PDCCHs in the candidate PDCCH set. The solution improves PDCCH coverage performance and increases the reliability of data transmission.

| Terminal device | | Network device |
| --- | --- | --- |
| | Step 201: the network device sends PDCCH based on the set of PDCCH candidates, and accordingly, the terminal device receives PDCCH based on the set of PDCCH candidates. The PDCCH corresponds to one PDCCH candidate or a plurality of PDCCH candidates in the set of PDCCH candidates | |

**FIG. 2**

EP 4 769 993 A1

**Description**

TECHNICAL FIELD

The present application relates to the technical field of mobile communication, in particular to a method for receiving PDCCH and a method for sending PDCCH, a device, and a storage medium.

BACKGROUND

With the continuous development of mobile communication technology, the terminal device can perform PDCCH reception by monitoring the PDCCH candidates in the set of PDCCH candidates.

In the related art, the limited satellite transmission power in the NTN system causes limited downlink coverage performance, resulting in that the terminal device may not detect the PDCCH, which affects the data transmission process.

SUMMARY

Embodiments of the present application provide a method for receiving PDCCH and a method for sending PDCCH, a device, and a storage medium. The technical solutions are as follows.

In one aspect, an embodiment of the present application provides a method for receiving a PDCCH, the method is performed by a terminal device, and the method further includes the following operation.

PDCCH is received based on the set of PDCCH candidates.

The PDCCH corresponds to one PDCCH candidate or a plurality of PDCCH candidates in the set of PDCCH candidates.

In one aspect, an embodiment of the present application provides a method for sending PDCCH, the method is performed by a network device, and the method further includes the following operation.

PDCCH is sent to a terminal device based on a set of PDCCH candidates. The PDCCH corresponds to one PDCCH candidate or a plurality of PDCCH candidates in the set of PDCCH candidates.

In another aspect, an embodiment of the present application provides an apparatus for receiving PDCCH. The apparatus includes a receiving module.

The receiving module is configured to receive PDCCH based on a set of PDCCH candidates.

The PDCCH corresponds to one PDCCH candidate or a plurality of PDCCH candidates in the set of PDCCH candidates.

In another aspect, an embodiment of the present application provides an apparatus for sending PDCCH. The apparatus includes a sending module.

The sending module is configured to send PDCCH to a terminal device based on a set of PDCCH candidates. The PDCCH corresponds to one PDCCH candidate or a plurality of PDCCH candidates in the set of PDCCH candidates.

In another aspect, an embodiment of the present application provides a terminal device. The terminal device includes a processor, a memory, and a transceiver.

A computer program is stored in the memory, and the processor executes the computer program to cause the terminal device to implement the above method for receiving PDCCH or the above method for sending PDCCH.

In another aspect, an embodiment of the present application provides a network device. The network device includes a processor, a memory, and a transceiver.

A computer program is stored in the memory, and the processor executes the computer program to cause the network device to implement the above method for receiving PDCCH or the above method for sending PDCCH.

In another aspect, an embodiment of the present application further provides a computer-readable storage medium, a computer program is stored in the storage medium, and the computer program is used to be loaded and executed by a processor of a communication device to implement the above method for receiving PDCCH or the above method for sending PDCCH.

In another aspect, the present application further provides a chip. and the chip is used to be executed in a communication device to cause the communication device to perform the above method for receiving PDCCH or the above method for sending PDCCH.

In another aspect, the present application provides a computer program product. The computer program product comprises computer instructions stored in a computer readable storage medium, a processor of a communication device reads the computer instructions from the computer-readable storage medium and executes the computer instructions to cause the communication device to perform the above method for receiving PDCCH or the above method for sending PDCCH.

In another aspect, the present application provides a computer program executed by a processor of a communication device to implement the above method for receiving PDCCH or the above method for sending PDCCH.

An embodiment of the present application provides a method for receiving PDCCH and a method for sending PDCCH. The PDCCH is sent and received based on a set of PDCCH candidates, the PDCCH received by a terminal device corresponds to one or more PDCCH candidates in the set of PDCCH candidates, and the terminal device can perform repetition of PDCCH transmission or introduce a larger aggregation level, thereby greatly improving the coverage performance of PDCCH and improving the reliability of data transmission in an NTN system.

BRIEF DESCRIPTION OF THE DRAWINGS

In order to more clearly explain the technical solutions in the embodiments of the present application, the accompanying drawings that need to be used in the description of the embodiments will be briefly introduced below, and it is obvious that the accompanying drawings in the following description are only some embodiments of the present application, and for those skilled in the art, other drawings can be obtained from these accompanying drawings without making creative labor.

FIG. 1 is a schematic architecture diagram of a communication system according to an embodiment of the present application.
FIG. 2 is a flowchart of a method for receiving PDCCH and a method for sending PDCCH according to an embodiment of the present application.
FIG. 3 is a schematic diagram of the set of repeated PDCCH candidates according to an exemplary embodiment of the present application.
FIG. 4 is a schematic diagram of CCE indexes corresponding to a PDCCH candidate located in a CORESET in a set of repeated PDCCH candidates according to an exemplary embodiment of the present application.
FIG. 5 is a schematic diagram of non-consecutive PDCCH candidates in a search space set corresponding to PDCCH candidates in a set of repeated PDCCH candidates according to an exemplary embodiment of the present application.
FIG. 6 is a schematic diagram of consecutive PDCCH candidates in a search space set corresponding to PDCCH candidates in a set of repeated PDCCH candidates according to an exemplary embodiment of the present application.
FIG. 7 is a schematic diagram of a PDCCH candidate in a search space set corresponding to a first PDCCH candidate in a set of repeated PDCCH candidates according to an exemplary embodiment of the present application.
FIG. 8 is a schematic diagram illustrating that some PDCCH candidates, located outside the CORESET, in a set of repeated PDCCH candidates, according to an exemplary embodiment of the present application.
FIG. 9 is a schematic diagram illustrating that interleaved mapping is used for a PDCCH candidate, located outside the CORESET, in a set of repeated PDCCH candidates, according to an exemplary embodiment of the present application.
FIG. 10 is a schematic diagram illustrating that interleaved mapping is not used for a PDCCH candidate, located outside the CORESET, in a set of repeated PDCCH candidates, according to an exemplary embodiment of the present application.
FIG. 11 is a schematic diagram illustrating that a repetition of PDCCH transmission region is determined based on the CORESET configuration and the number of repetitions of PDCCH transmission, according to an exemplary embodiment of the present application.
FIG. 12 is a block diagram of an apparatus for receiving PDCCH according to an embodiment of the present application.
FIG. 13 is a block diagram of an apparatus for sending PDCCH according to an embodiment of the present application.
FIG. 14 is a schematic structural diagram of a communication device according to an embodiment of the present application.

DETAILED DESCRIPTION

In order to clarify the object, technical solution, and advantages of the present application, embodiments of the present application will be described in further detail below with reference to the accompanying drawings.
The network architecture and the service scenarios described in the embodiments of the present application are for more clearly describing the technical solutions of the embodiments of the present application, and do not constitute a limitation on the technical solutions provided by the embodiments of the present application. Those skilled in the art will know that with the evolution of the network architecture and the emergence of new service scenarios, the technical solutions provided by the embodiments of the present application are equally applicable to similar technical problems.

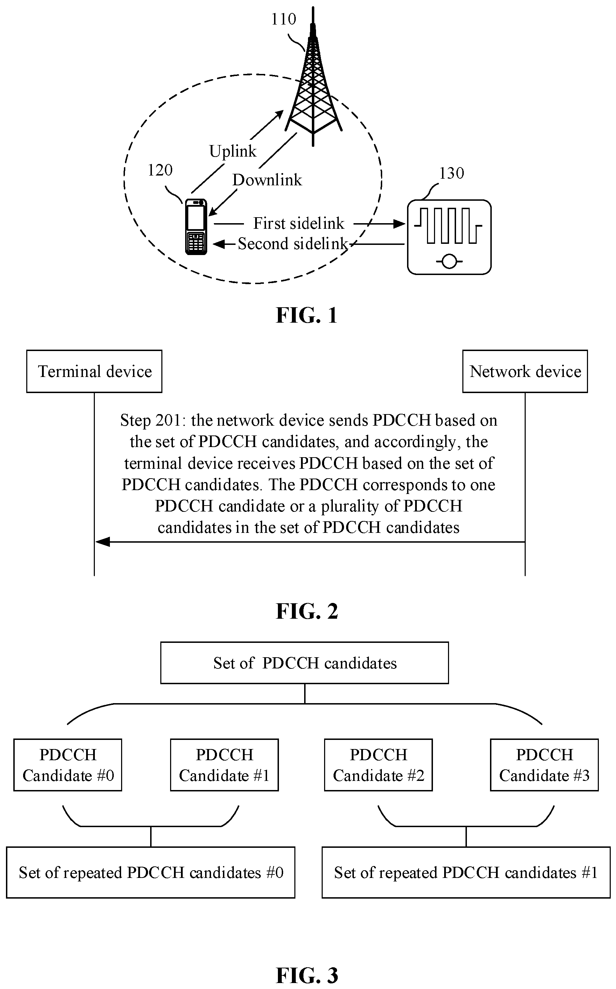

FIG. 1 is a schematic diagram of a communication system according to an exemplary embodiment of the present application. The communication system includes the network device 110 and the terminal device 120, and/or the terminal device 120 and the terminal device 130, but the present application is not limited thereto.
The network device 110 in the present application provides radio communication functions. The network device 110 includes but not limited to: an Evolved Node B (eNB), a Radio Network Controller (RNC), a Node B (NB), a Base Station Controller (BSC), a Base Transceiver Station (BTS), a home base station (e.g., a Home Evolved Node B, or Home Node B, HNB), a base band unit (BBU), an Access Point (AP) in a Wireless Fidelity (Wi-Fi) system, a wireless relay node, a wireless Backhaul node, a Transmission Point (TP), or a Transmission and Reception Point (TRP), or the like, or a next Generation Node B (gNB) or transmission Point (TRP or TP) in a fifth generation (5G) mobile communication system, or one antenna panel or a group of antenna panels (including a plurality of antenna panels) of a base station in a 5G system, or a network node constituting a gNB or transmission point, such as BBU or Distributed Unit (DU), etc., or a base station and the like in a Beyond Fifth Generation (B5G) mobile communication system or in a sixth generation (6G) mobile communication system, or a Core Network (CN), a Fronthaul, a Backhaul, a Radio Access Network (RAN), a network slice, or the like, or a serving cell, a Primary Cell (PCell), a Primary Secondary Cell (PSCell), a Special Cell (SpCell), a Secondary Cell (SCell), a neighbor cell, or the like of the terminal device.

The terminal device 120 and/or the terminal device 130 in the present application may be referred to as a User Equipment (UE), an access terminal, a subscriber unit, a subscriber station, a mobile station, a mobile terminal, a remote station, a remote terminal, a mobile device, a user terminal, a terminal, a wireless communication device, a user agent, and a user device. This terminal includes but is not limited to: a handheld device, a wearable device, an in-vehicle device and an internet of things device, etc., for example: a mobile phone, a tablet computer, an e-book reader, a laptop portable computer, a desktop computer, a television, a game console, a mobile Internet device (MID), an augmented reality (AR) terminal, a virtual reality (VR) terminal and a mixed reality (MR) terminal, a wearable device, a gamepad, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical, a cellular phone, a cordless phone, a Session Initiation Protocol (SIP) phone, and a wireless local loop station, a personal digital assistant (PDA), a set top box (STB), a customer premise equipment (CPE), etc.

The network device 110 and the terminal device 120 communicate with each other through a certain air interface technology, such as a Uu interface.

For example, there are two communication scenarios between the network device 110 and the terminal device 120: an uplink communication scenario and a downlink communication scenario. The uplink communication refers to sending a signal to the network device 110. The downlink communication refers to sending a signal to the terminal device 120.

The terminal device 120 and the terminal device 130 communicate with each other through a certain air interface technology, such as a PC5 interface.

In some embodiments, there are two communication scenarios between the terminal device 120 and the terminal device 130: a first sidelink communication scenario and a second sidelink communication scenario. The first sidelink communication refers to sending a signal to the terminal device 130. The second sidelink communication refers to sending a signal to the terminal device 120.

The terminal device 120 and the terminal device 130 are both within the network coverage range and located in the same cell, or the terminal device 120 and the terminal device 130 are both within the network coverage range but located in different cells, or the terminal device 120 is within the network coverage range but the terminal device 130 is outside the network coverage range.

The technical solutions provided by the embodiments of the present application can be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) System, a LTE Time Division Duplex (TDD) system, an Advanced Long Term Evolution (LTE-A) system, a Universal Mobile Telecommunication System (UMTS), a Worldwide Interoperability for Microwave Access (WiMAX) communication system, a 5G mobile communication system, a New Radio (NR) system, an evolution system of NR system, a LTE-based access to unlicensed spectrum (LTE-U) system, a NR-based access to unlicensed spectrum (NR-U) system, a Terrestrial Networks (TN) system, a Non-Terrestrial Networks (NTN) system, a Wireless Local Area Networks (WLAN), a Wireless Fidelity (Wi-Fi), a cellular internet of things system, and a cellular passive internet of things system, or may be applied to a subsequent evolution system of the 5G NR system, or may be applied to B5G, 6G, and subsequent evolution systems. In some embodiments of the present application, "NR" may also be referred to as a 5G NR system or a 5G system. The 5G mobile communication system may include a Non-Standalone networking (NSA) and/or a Standalone networking (SA).

The technical solutions provided by the embodiments of the present application may also be applied to Machine Type Communication (MTC), Long Term Evolution-Machine (LTE-M), Device to Device (D2D) network, Machine to Machine (M2M) network, Internet of Things (IoT) network, or other networks. The IoT network may include, for example, Internet of Vehicles. The communication methods in the Internet of Vehicles system are collectively referred to as vehicle to other devices (Vehicle to X, V2X, X may represent anything), and for example, the V2X may include: Vehicle to Vehicle (V2V) communication, Vehicle to Infrastructure (V2I) communication, Vehicle to Pedestrian (V2P) communication, Vehicle to Network (V2N) communication, and the like.

Before introducing the technical solutions of the present application, some background technical knowledge related to the present application will be introduced and described. The following related technologies can be arbitrarily combined with the technical solutions of the embodiments of the present application as optional solutions, and all of them belong to the scope of protection of the embodiments of the present application. Embodiments of the present application include at least some of the following.

1) PDCCH structure design of NR system

One Physical Downlink Control Channel (PDCCH) is composed of one or more control channel elements (CCEs), and the number of CCEs constituting the PDCCH is called an aggregation level. The aggregation levels currently supported in related technologies are shown in Table 1. One CCE is composed of 6 Resource Element Groups (REGs), where one REG is equal to a physical resource corresponding to one Orthogonal Frequency Division Multiplexing (OFDM) symbol in the time domain and one Resource Block (RB) in the frequency domain.

Table 1

| CCE Aggregation Grade | Number of CCEs |
| --- | --- |
| 1 | 1 |
| 2 | 2 |
| 4 | 4 |
| 8 | 8 |
| 16 | 16 |

Transmission of the PDCCH is performed within a Control-Resource Set (CORESET), and one CORESET consists of $N_{RB}^{CORESET}$ RBs in frequency domain and $N_{symb}^{CORESET} \in \{1, 2, 3\}$ symbols in time domain. The REGs within one CORESET are numbered in an ascending order from 0, in a time-domain-first manner starting from the first OFDM symbol and the lowest RB of the CORESET.

The terminal device may be configured with a plurality of CORESETs, and each CORESET is associated with only one CCE-REG mapping method. The CCE-REG mapping within CORESET can be an interleaved mapping or a non-interleaved mapping, and is described through a REG bundle.

REG bundle i is defined as REGs {iL, iL+1,..., iL+L-1}, where L is the size of the REG bundle, $i = 0, 1,..., N_{REG}^{CORESET}/L-1, N_{REG}^{CORESET} = N_{RB}^{CORESET} N_{symbB}^{CORESET}$ is the number of REGs in CORESET.

CCE j consists of REG bundles If (6 j/L), f (6 j/L + 1), ... f (6 j/L + 6/L - 1)}, where f (·) is an interleaving function.

For the non-interleaved CCE-REG mapping, L = 6 and f (x) = x.

For the interleaved CCE-REG mapping, when $N_{symbB}^{CORESET} = 1$, L ∈ {2, 6}; when $N_{symbB}^{CORESET} \in \{2, 6\}$, L ∈ $\{N_{symbB}^{CORESET}, 6\}$ .

The interleaved mapping adopts a rectangular interleaver, and the interleaving function is defined as:

$$f(x) = \left(rC + c + n_{shift}\right) mod(N_{REG}^{CORESET}/L)$$

Here, x = cR + r, r = 0, 1,..., R-1, c = 0, 1,..., C-1. R is the number of rows of the rectangular interleaver and R ∈ {2, 3, 6}. $C = N_{REG}^{CORESET} / (LR)$ and C is an integer. $n_{shift}$ is an offset parameter, which is used to realize inter-cell interference randomization.

2) PDCCH monitoring process of NR system

The terminal device determines a set of PDCCH candidates to be monitored according to a PDCCH search space set configured by a higher layer, and the search space set may be a Common Search Space (CSS) set or a UE-specific Search Space (USS) set.

Specifically, for the search space set s associated with the CORESET p, the terminal device determines that the CCE index for aggregation level L corresponding to the PDCCH candidate $m_{s,n_{CI}}^{(L)}$ in slot $n_{s,f}^{\mu}$ is:

$$L \cdot \left\{ \left( Y_{p,n_{s,f}^{\mu}} + \left\lfloor \frac{m_{s,n_{CI}}^{(L)} \cdot N_{CCE,p}}{L \cdot M_{s,\max}^{(L)}} \right\rfloor + n_{CI} \right) mod \left\lfloor N_{CCE,p}/L \right\rfloor \right\} + i$$

For CSS, $Y_{p,n_{s,f}^{\mu}} = 0 = 0$. For USS, $Y_{p,n_{s,f}^{\mu}} = \left( A_p \cdot Y_{p,n_{s,f}^{\mu}-1} \right) mod D$, $Y_{p,-1} = n_{RNTI} \neq 0$, D = 65537.

For $p\ mod\ 3 = 0$, $A_p$ = 39827. For $p\ mod\ 3 = 1$, $A_p$ = 39829. For $p\ mod\ 3 = 2$, $A_p$ = 39839.

i = 0,..., L-1.

$N_{CCE,p}$ is the number of CCEs in CORESET p, numbered from 0 to $N_{CCE,p}$ - 1.

If cross-carrier indication is configured, $n_{CI}$ is the value of the carrier indication domain, so as to ensure that PDCCH candidates scheduling different carriers occupy nonoverlapping CCEs whenever possible, otherwise, including CSS, $n_{CI}$ = 0. $m_{s,n_{CI}}^{(L)} = 0, ..., M_{s,n_{CI}}^{(L)} - 1$, where $M_{s,n_{CI}}^{(L)}$ is the number of PDCCH candidates configured by the higher layer for the terminal device and monitored when the aggregation level is L in the search space set s of the serving cell $n_{CI}$.

For CSS, $M_{S,\max}^{(L)} = M_{S,0}^{(L)}$. For USS, $M_{S,\max}^{(L)}$ is the maximum value of $M_{s,n_{CI}}^{(L)}$ among all configured $n_{CI}$ values when the aggregation level in the search space set s is L.

In the related art, the maximum PDCCH aggregation level is 16, and repetition of PDCCH transmission is not supported. Considering that the downlink coverage performance is limited due to the limited satellite transmission power in the NTN system, the terminal equipment may not detect the PDCCH at this time, which affects the data transmission process in the NTN system. Therefore, how to improve PDCCH coverage performance is an urgent problem to be solved.

Please refer to FIG. 2, which shows a flowchart of a method for receiving PDCCH and a method for sending PDCCH according to an embodiment of the present application, and the method may be interactively executed by a terminal device and a network device. The terminal device may be a terminal device 120 or a terminal device 130 in the network architecture shown in FIG. 1, and the network device may be a network device 110 in the network architecture shown in FIG. 1. The method may include the following steps.

In step 201, the network device sends PDCCH based on the set of PDCCH candidates, and accordingly, the terminal device receives the PDCCH based on the set of PDCCH candidates.

The PDCCH corresponds to one PDCCH candidate or a plurality of PDCCH candidates in the set of PDCCH candidates.

That is, the network device sends PDCCH to the terminal device, and the terminal device performs PDCCH reception by monitoring the PDCCH candidates in the set of PDCCH candidates.

The PDCCH received by the terminal device corresponds to one or more PDCCH candidates in the set of PDCCH candidates.

In order to improve the coverage performance of the PDCCH, the terminal device may perform repetition of PDCCH transmission or introduce a larger aggregation level.

In one aspect, if the PDCCH received by the terminal device corresponds to a plurality of PDCCH candidates in the set of PDCCH candidates, then:

1. at least one PDCCH candidate is located in the CORESET, and CCE index(es) corresponding to the PDCCH candidate(s) located in the CORESET is determined according to the configuration information of the search space set;

2. the one or more PDCCH candidates may be located outside the CORESET, and the resource position of the PDCCH candidate(s) outside the CORESET is determined according to the resource position of the PDCCH candidate(s) within the CORESET;

3. the CORESET configuration and/or the number of repetitions of PDCCH transmission for repetition of PDCCH transmission are provided.

On the other hand, if the PDCCH received by the terminal device corresponds to one PDCCH candidate in the set of PDCCH candidates, then:

1. the PDCCH candidate has an aggregation level greater than 16;

2. the CORESET configuration of which the number of CCEs is greater than 16 and/or the number of PDCCH candidates of which the aggregation level is greater than 16 are provided.

In summary, according to the solution shown in the embodiment of the present application, the PDCCH is sent and received based on the set of PDCCH candidates, and the PDCCH received by the terminal device corresponds to one or more PDCCH candidates in the set of PDCCH candidates, and the terminal device may perform repetition of PDCCH transmission or introduce a larger aggregation level, thereby greatly improving the coverage performance of the PDCCH and improving the reliability of data transmission in the NTN system.

In some embodiments, when the PDCCH received by the terminal device corresponds to a plurality of PDCCH candidates in the set of PDCCH candidates, the plurality of PDCCH candidates are used to perform repetition of PDCCH transmission.

That is, if the PDCCH received by the terminal device corresponds to a plurality of PDCCH candidates in the set of PDCCH candidates, the plurality of PDCCH candidates may be used to perform repetition of PDCCH transmission, and the embodiment of the present application can improve the coverage performance of the PDCCH.

In some embodiments, step 201 of FIG. 2 described above may be implemented as the following.

In a case where the PDCCH received by the terminal device corresponds to a plurality of PDCCH candidates in the set of PDCCH candidates, the terminal device receives the PDCCH based on the set(s) of repeated PDCCH candidates. The set of repeated PDCCH candidates consists of a plurality of PDCCH candidates in the set of PDCCH candidates.

That is, in a case where the PDCCH received by the terminal device corresponds to a plurality of PDCCH candidates in the set of PDCCH candidates, a plurality of PDCCH candidates constitute the set of repeated PDCCH candidates, and the set of repeated PDCCH candidates is used for the terminal device to receive the PDCCH.

In the embodiment of the present application, the PDCCH received by the terminal device corresponds to a plurality of PDCCH candidates in the set of PDCCH candidates, and at this time, the terminal device may receive the repetition of PDCCH transmission by monitoring the set(s) of repeated PDCCH candidates in the set of PDCCH candidates, thereby improving the reliability of data transmission.

Please refer to FIG. 3, which illustrates a schematic diagram of the set of repeated PDCCH candidates according to an exemplary embodiment of the present application.

As shown in FIG. 3, the set of PDCCH candidates includes the PDCCH candidates {0, 1, 2, 3}, and for repetition of PDCCH transmission, the set of PDCCH candidates further includes the set of repeated PDCCH candidates {0, 1}.

The set of repeated PDCCH candidates #0 includes the PDCCH candidates {0, 1}, and the set of repeated PDCCH candidates #1 includes the PDCCH candidates {2, 3}.

The terminal device receives the repetition of PDCCH transmission by monitoring the set of repeated PDCCH candidates #0 and the set of repeated PDCCH candidates #1.

In some embodiments, at least one PDCCH candidate in the set of repeated PDCCH candidates is located in the first CORESET. The first CORESET is a CORESET to receive the repetition of PDCCH transmission.

That is, the PDCCH candidates in the set of repeated PDCCH candidates are all located in the first CORESET. Alternatively, a part of the PDCCH candidates in the set of repeated PDCCH candidates is located in the first CORESET, and another part of the PDCCH candidates in the set of repeated PDCCH candidates is located outside the first CORESET. The embodiment of the present application makes the resource configuration of the repetition of PDCCH transmission more flexible, and provides more space for further expansion in the future.

Herein, the CORESET itself may not have repetition of PDCCH transmission information, for example, when the first CORESET is associated with the first search space set (SS set), the repetition of PDCCH transmission is performed. When the first CORESET is associated with the second SS set, the repetition of PDCCH transmission is not performed.

In some embodiments, the method shown in FIG. 2 further includes the following operation.

Based on the configuration information of the search space set, the terminal device determines CCE index(es) corresponding to the first PDCCH candidate. The first PDCCH candidate is one of the PDCCH candidates, located in the first CORESET, in the set of repeated PDCCH candidates.

That is, the CCE index(es) corresponding to the first PDCCH candidate is determined based on the configuration information of the search space set.

In the embodiment of the present application, at least one PDCCH candidate in the set of repeated PDCCH candidates is located in the CORESET, and at this time, the terminal device may determine the CCE index(es) corresponding to the PDCCH candidate(s), located in the CORESET, in the set of repeated PDCCH candidates, that is, determine the CCE index(es) corresponding to the first PDCCH candidate, according to the configuration information of the search space set.

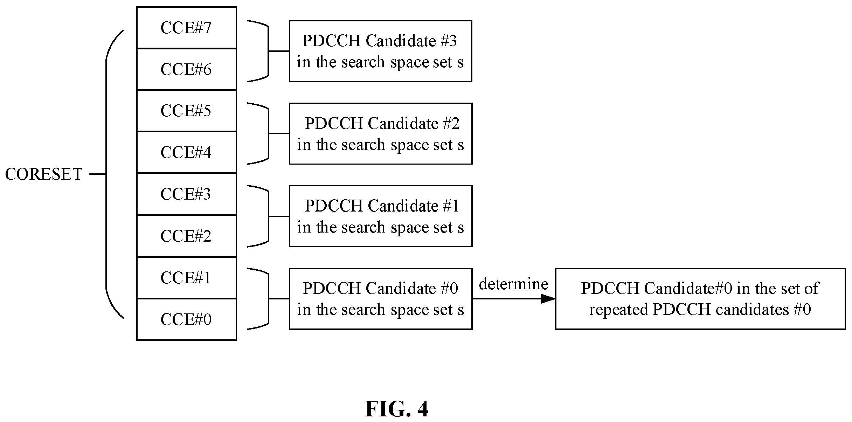

Referring to FIG. 4, which shows a schematic diagram illustrating CCE indexes corresponding to a PDCCH candidate located in a CORESET in a set of repeated PDCCH candidates according to an exemplary embodiment of the present application.

As shown in FIG. 4, taking the number of CCEs of CORESET p, $N_{\mathrm{CCE},p}$ = 8, the aggregation level L = 2, $Y_{p,n_{\mathrm{s,f}}^{\mu}} = 0$, $n_{CI}$ = 0, and $M_{s,\mathrm{max}}^{(L)} = 4$ as an example, according to the related art, the terminal device first determines that the CCE indexes corresponding to the PDCCH candidate $m_{s,n_{CI}}^{(L)}$ in the search space set s is:

$$L \cdot \left\{ \left( Y_{p,n_{\mathrm{s,f}}^{\mu}} + \left\lfloor \frac{m_{s,n_{CI}} \cdot N_{\mathrm{CCE},p}}{L \cdot M_{s,\mathrm{max}}^{(L)}} \right\rfloor + n_{CI} \right) mod \left\lfloor N_{\mathrm{CCE},p}/L \right\rfloor \right\} + i$$

$$= 2 \cdot \left\{ \left( \left\lfloor \frac{m_{s,n_{CI}} \cdot 8}{2 \cdot 4} \right\rfloor \right) mod \left\lfloor 8/2 \right\rfloor \right\} + i, i = 0,1$$

That is, the CCE indexes corresponding to the PDCCH candidate $m_{s,n_{CI}}^{(L)} = 0$ is CCE #0-1.

Then, if the PDCCH candidate #0 in the set of repeated PDCCH candidates #0 corresponds to the PDCCH candidate $m_{s,n_{CI}}^{(L)} = 0$ in the search space set s, the terminal device further determines that the CCE indexes corresponding to the PDCCH candidate #0 in the set of repeated PDCCH candidates #0 is CCE # 0-1.

The embodiment of the present application provides a feasible solution for determining CCE index(es) corresponding to a first PDCCH candidate through configuration information of search space set, which can reduce standardization complexity. The terminal device determines the CCE index(es) corresponding to the PDCCH candidate(s), located in the CORESET, in the set of repeated PDCCH candidates according to the CCE index(es) corresponding to the PDCCH candidate(s) in the search space set, that is, determines the CCE index(es) corresponding to the first PDCCH candidate, thereby determining the resource position corresponding to the first PDCCH candidate.

In some embodiments, the determining the CCE index(es) corresponding to the first PDCCH candidate based on the configuration information of the search space set includes the following operation.

The terminal device determines CCE index(es) corresponding to the first PDCCH candidate based on the CCE index(es) corresponding to the second PDCCH candidate.

The second PDCCH candidate is a PDCCH candidate, having a correspondence relationship with the first PDCCH candidate, in the search space set.

That is, the CCE index corresponding to the first PDCCH candidate is determined by the CCE index corresponding to the second PDCCH candidate.

In an embodiment of the present application, at least one PDCCH candidate located in the CORESET in the set of repeated PDCCH candidates has a correspondence relationship with the PDCCH candidate(s) in the search space set. At this time, for the PDCCH candidate(s) in the set of repeated PDCCH candidates having a correspondence relationship with the PDCCH candidate(s) in the search space set, the terminal device may determine the CCE index(es) corresponding to the corresponding PDCCH candidate(s) in the set of repeated PDCCH candidates based on the CCE index(es) corresponding to the PDCCH candidate(s) in the search space set.

An embodiment of the present application provides a feasible solution for determining CCE index(es) corresponding to a first PDCCH candidate based on a correspondence relationship, which can reduce standardization complexity. The first PDCCH candidate and the second PDCCH candidate have a correspondence relationship, and the terminal device may determine the CCE index(es) of the first PDCCH candidate according to the CCE index(es) of the second PDCCH candidate, thereby determining the resource position corresponding to the first PDCCH candidate.

In some embodiments, the PDCCH candidates, located in CORESET, in the set of repeated PDCCH candidates may correspond to non-consecutive PDCCH candidates in the search space set, or may correspond to consecutive PDCCH candidates in the search space set.

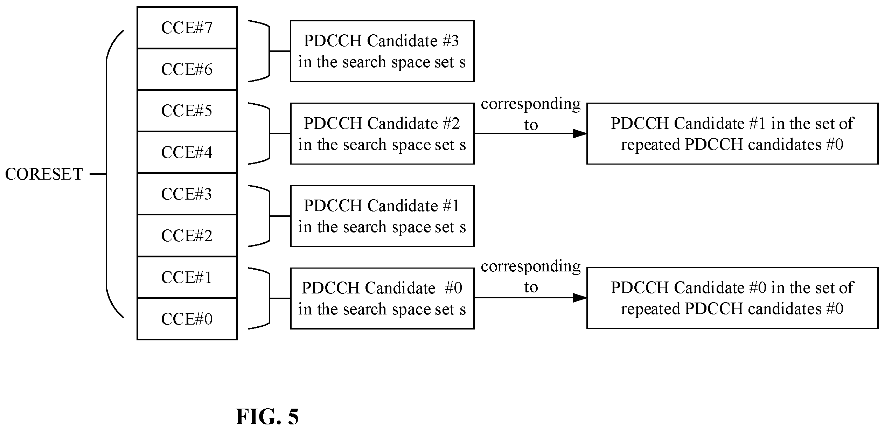

In one aspect, if the PDCCH candidates, located in CORESET, in the set of repeated PDCCH candidates correspond to the non-consecutive PDCCH candidates in the search space set. Referring to FIG. 5, a schematic diagram of PDCCH candidates in a set of repeated PDCCH candidates correspond to non-consecutive PDCCH candidates in a search space set according to an exemplary embodiment of the present application is shown.

As shown in FIG. 5, the PDCCH candidates {0, 1} in the set of repeated PDCCH candidates #0 correspond to the PDCCH candidate $m_{s,n_{CI}}^{(L)} = 0, 2$ in the search space set s.

At this time, the PDCCH candidates in the set of repeated PDCCH candidates has a more flexible correspondence relationship with the PDCCH candidates in the search space set, and the resource allocation of the repetition of PDCCH transmission is more flexible.

The terminal device may determine, according to the CCE indexes corresponding to the PDCCH candidate $m_{s,n_{CI}}^{(L)} = 0$ in the search space set s, the CCE index(es) corresponding to the PDCCH candidate #0 in the set of repeated PDCCH candidates #0, that is, CCE #0-1.

The terminal device may determine, according to the CCE indexes corresponding to the PDCCH candidate $m_{s,n_{CI}}^{(L)} = 2$ in the search space set s, the CCE indexes corresponding to the PDCCH candidate #1 in the set of repeated PDCCH candidates #0, that is, the CCE #4-5.

In another aspect, if the PDCCH candidates located in the CORESET in the set of repeated PDCCH candidates correspond to the consecutive PDCCH candidates in the search space set.

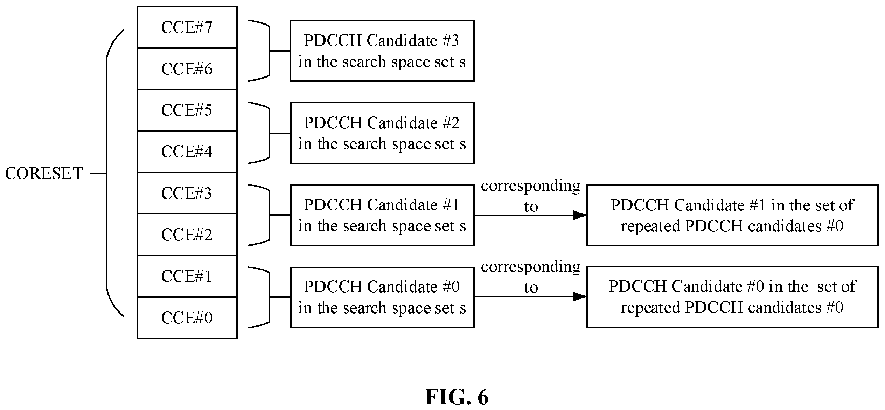

Referring to FIG. 6, a schematic diagram of consecutive PDCCH candidates in a search space set corresponding to PDCCH candidates in a set of repeated PDCCH candidates according to an exemplary embodiment of the present application is shown.

As shown in FIG. 6, which is the same as the search space set configuration corresponding to FIG. 4, the terminal device first determines that the CCE indexes corresponding to the PDCCH candidate $m_{s,n_{CI}}^{(L)} = 0,1$ in the search space set are CCE #0-1 and CCE #2-3, respectively. If the PDCCH candidates {0, 1} in the set of repeated PDCCH candidates #0 correspond to the PDCCH candidates $m_{s,n_{CI}}^{(L)} = 0,1$ in the search space set s one to one, the terminal device further determines that the CCE indexes corresponding to the PDCCH candidate {0, 1} in the set of repeated PDCCH candidates #0 are CCE # 0-1 and CCE #2-3, respectively.

Herein, one PDCCH candidate {0, 1} located in CORESET in the set of repeated PDCCH candidates is a first PDCCH candidate. One PDCCH candidate $m_{s,n_{CI}}^{(L)} = 0,1$, having a corresponding relationship with the first PDCCH candidate, in the search space set is the second PDCCH candidate.

In some embodiments, the method shown in FIG. 2 further includes the following operation.

The terminal device determines a resource position of a third PDCCH candidate based on the resource position of the first PDCCH candidate. The third PDCCH candidate is any one of PDCCH candidates, other than the first PDCCH candidate, located in the first CORESET in the set of repeated PDCCH candidates.

That is, the resource position of the third PDCCH candidate is determined based on the resource position of the first PDCCH candidate.

In an embodiment of the present application, the first PDCCH candidate, located in the CORESET, in the set of repeated PDCCH candidates corresponds to the PDCCH candidate in the search space set, and the resource position corresponding to another PDCCH candidate (that is, the third PDCCH candidate) located in the CORESET in the set of repeated PDCCH candidates is determined according to the resource position corresponding to the first PDCCH candidate.

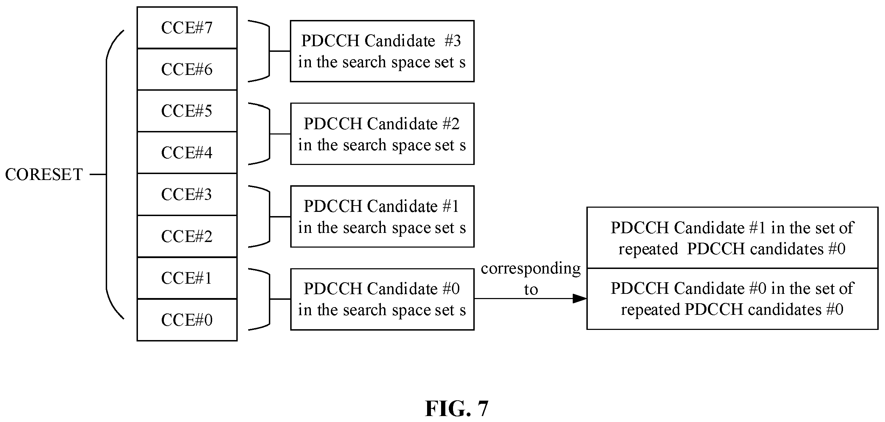

Referring to FIG. 7, a schematic diagram of a PDCCH candidate in a search space set corresponding to a first PDCCH candidate in a set of repeated PDCCH candidates according to an exemplary embodiment of the present application is shown.

As shown in FIG. 7, the first PDCCH candidate in the set of repeated PDCCH candidates #0, such as the PDCCH candidate #0, corresponds to the PDCCH candidate $m_{s,n_{CI}}^{(L)} = 0$ in the search space set s. Frequency domain resource corresponding to another PDCCH candidate (i.e., the third PDCCH candidate), located in CORESET in the set of repeated PDCCH candidates #0, such as PDCCH candidate #1, is determined according to the first PDCCH candidate. For example, PDCCH candidate #1 and PDCCH candidate #0 occupy adjacent CCE indexes or adjacent frequency domain resources.

That is, the CCE index(es) or the frequency domain resource of another PDCCH candidate may be determined according to the CCE index(es) or the frequency domain resource of one PDCCH candidate located in CORESET in the set of repeated PDCCH candidates. The embodiment of the present application can improve the feasibility of repetition of PDCCH transmission.

In some embodiments, PDCCH candidates in the set of repeated PDCCH candidates have at least one of the following correspondence relationships.

PDCCH candidates in the set of repeated PDCCH candidates correspond to consecutive PDCCH candidates in the search space set.

PDCCH candidates in the set of repeated PDCCH candidates correspond to consecutive CCE indexes.

PDCCH candidates in the set of repeated PDCCH candidates correspond to consecutive resource positions.

That is, the above correspondence relationships may be the following three types: PDCCH candidates in the set of repeated PDCCH candidates correspond to consecutive PDCCH candidates in the search space set, or correspond to consecutive CCE indexes, or correspond to consecutive resource positions. It may also be any combination of the three correspondence relationships. The embodiment of the present application can simplify the procedure for the terminal device to receive the PDCCH, thereby reducing the workload.

The PDCCH candidates located in the CORESET in the set of repeated PDCCH candidates correspond to consecutive PDCCH candidates in the search space set. As shown in FIG. 6, the PDCCH candidates {0, 1} in the set of repeated PDCCH candidates #0 correspond to the PDCCH candidate $m_{s,n_{CI}}^{(L)} = 0, 1$ in the search space set s. At this time, the terminal device may determine CCE index(es) corresponding to another PDCCH candidate located in the CORESET in the set of repeated PDCCH candidates based on CCE index(es) corresponding to one PDCCH candidate located in the CORESET in the set of repeated PDCCH candidates, thereby reducing the complexity of detecting the repetition of PDCCH transmission by the terminal device.

That is, if the terminal device determines the CCE indexes, i.e.,, CCE #0-1, corresponding to the PDCCH candidate #0 (that is, the first PDCCH candidate) in the set of repeated PDCCH candidates #0 according to the CCE indexes corresponding to the PDCCH candidate $m_{s,n_{CI}}^{(L)} = 0$ (that is, the second PDCCH candidate) in the search space set s; then, based on the consecutive correspondence relationship, the CCE indexes, i.e., the CCE #2-3, corresponding to the PDCCH candidate #1 in the set of repeated PDCCH candidates #0, may be determined according to the CCE indexes corresponding to the PDCCH candidate #0 (that is, the first PDCCH candidate) in the set of repeated PDCCH candidates #0.

Herein, the PDCCH candidate $m_{s,n_{CI}}^{(L)} = 1$ in the search space set s is adjacent to the PDCCH candidate $m_{s,n_{CI}}^{(L)} = 0$ (i.e., the second PDCCH candidate) in the search space set s, and the PDCCH candidate #1 in the set of repeated PDCCH candidates #0 is adjacent to the PDCCH candidate #0 (i.e., the first PDCCH candidate) in the set of repeated PDCCH candidates #0;

The PDCCH candidate $m_{s,n_{CI}}^{(L)} = 1$ in the search space set s has a correspondence relationship with the PDCCH candidate #1 in the set of repeated PDCCH candidates #0, and the PDCCH candidate $m_{s,n_{CI}}^{(L)} = 0$ (that is, the second PDCCH candidate) in the search space set s has a correspondence relationship with the PDCCH candidate #0 (that is, the first PDCCH candidate) in the set of repeated PDCCH candidates #0.

In some embodiments, at least one PDCCH candidate in the set of repeated PDCCH candidates is located outside the first CORESET.

That is, the PDCCH candidates in the above set of repeated PDCCH candidates are all located outside the first CORESET. Alternatively, in the above set of repeated PDCCH candidates, one part of the PDCCH candidates is located outside the first CORESET, and the other part of the PDCCH candidates is located in the first CORESET. The embodiment of the present application allows more flexible resource configuration of the repetition of PDCCH transmission, and provides greater room for further expansion in the future.

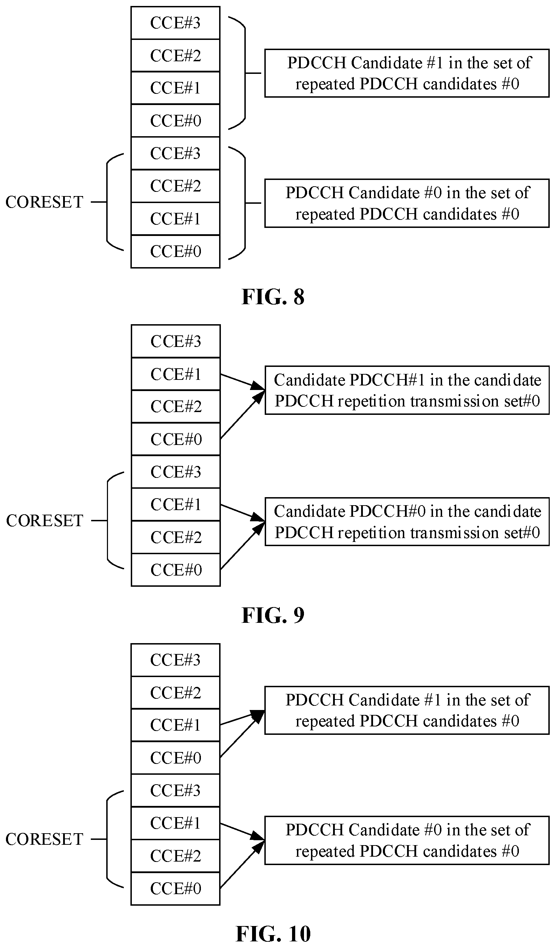

Referring to FIG. 8, a schematic diagram illustrating that some PDCCH candidates, located outside the CORESET, in a set of repeated PDCCH candidates, according to an exemplary embodiment of the present application is shown.

As shown in FIG. 8, taking the number of CCEs of CORESET p, $N_{\text{CCE},p}$ = 4, the aggregation level L = 4, $Y_{p,n_{s,f}^{\mu}} = 0$, $n_{CI}$ = 0, and $M_{s,\max}^{(L)} = 1$ as an example, the terminal device determines that in the set of repeated PDCCH candidates, the PDCCH candidate #0 is located in CORESET, and the PDCCH candidate #1 is located outside CORESET.

In some embodiments, the method shown in FIG. 2 further includes the following operation.

The terminal device determines a resource position of a fourth PDCCH candidate based on the resource position of the first PDCCH candidate. The fourth PDCCH candidate is any one of the PDCCH candidates located outside the first CORESET in the set of repeated PDCCH candidates.

That is, the resource position of the fourth PDCCH candidate is determined based on the resource position of the first PDCCH candidate.

As shown in FIG. 8, the terminal device first determines that the CCE indexes corresponding to the PDCCH candidate #0 located in the CORESET in the set of repeated PDCCH candidates is CCE #0-3, that is, first determines the resource position of the first PDCCH candidate. Then, one or more resource regions are determined outside the CORESET, for example, the resource regions has the same size as the CORESET, and the resource position corresponding to the PDCCH candidate #1 is determined in the resource region, that is, the resource position of the fourth PDCCH candidate is then determined.

It should be noted that the number of resource regions outside the CORESET depends on the number of PDCCH candidates outside the CORESET.

For example, when there is only one PDCCH candidate outside the CORESET, only one resource region outside the CORESET is needed.

An embodiment of the present application provides a resource determination solution of PDCCH candidate(s) located outside the first CORESET in the set of repeated PDCCH candidates. The terminal device determines a resource position of a PDCCH candidate located outside the CORESET in a set of repeated PDCCH candidates according to a resource position of a PDCCH candidate located inside the CORESET in a set of repeated PDCCH candidates. Thus, the workload of resource determination can be reduced.

In some embodiments, the first PDCCH candidate and the fourth PDCCH candidate use non-interleaved mapping.

Or, the first PDCCH candidate and the fourth PDCCH candidate use interleaved mapping.

Or, the first PDCCH candidate uses interleaved mapping, and the fourth PDCCH candidate uses non-interleaved mapping.

That is, the same CCE-REG mapping manner or different CCE-REG mapping manners may be used for the PDCCH candidate(s) located in the CORESET in the set of repeated PDCCH candidates and the PDCCH candidate(s) located in the CORESET in the set of repeated PDCCH candidates. The embodiment of the present application can improve the flexibility of the scheme and provide greater room for further expansion in the future.

In one aspect, the PDCCH candidate (that is, the first PDCCH candidate) located in CORESET in the repetition of PDCCH transmission set uses non-interleaved mapping. The PDCCH candidate (i.e., the fourth PDCCH candidate) located outside the CORESET in the repetition of PDCCH transmission set also uses non-interleaved mapping.

As shown in FIG. 8, PDCCH candidate #0 located in CORESET in the set of repeated PDCCH candidates uses non-interleaved mapping, and corresponds to CCE #0-3. The PDCCH candidate #1 located outside the CORESET also uses non-interleaved mapping in the resource region outside the CORESET, and corresponds to the CCE # 0-3.

In another aspect, the PDCCH candidate (that is, the first PDCCH candidate) located in the CORESET in the repetition of PDCCH transmission set uses interleaved mapping. The PDCCH candidate (i.e., the fourth PDCCH candidate) located outside the CORESET in the repetition of PDCCH transmission set also uses interleaved mapping.

Referring to FIG. 9, which shows that the interleaved mapping is used for a PDCCH candidate located outside the CORESET in a set of repeated PDCCH candidates, according to an exemplary embodiment of the present application.

As shown in FIG. 9, taking the number of CCEs of CORESET p, $N_{\text{CCE},p}$ = 4, the aggregation level L = 2,

$$Y_{p,n_{\text{s,f}}^{\mu}} = 0 \text{ , } n_{CI} = 0, \quad M_{s,\max}^{(L)} = 1 \text{ , and the number of interleaver rows R = 2 as an example, PDCCH candidate \#0}$$

located in CORESET in the set of repeated PDCCH candidates uses interleaved mapping, and corresponds to CCE #0-1. The PDCCH candidate #1 located outside the CORESET also uses interleaved mapping in the resource region outside the CORESET, and corresponds to CCE #0-1.

In another aspect, the PDCCH candidate (that is, the first PDCCH candidate) located in the CORESET in the repetition of PDCCH transmission set uses interleaved mapping. The PDCCH candidate (i.e., the fourth PDCCH candidate) located outside the CORESET in the repetition of PDCCH transmission set uses non-interleaved mapping.

Referring to FIG. 10, which shows that interleaved mapping is not used for a PDCCH candidate located outside the CORESET in a set of repeated PDCCH candidates, according to an exemplary embodiment of the present application.

As shown in FIG. 10, taking the number of CCEs of CORESET p, $N_{\text{CCE},p}$ = 4, the aggregation level L = 2,

$$Y_{p,n_{\text{s,f}}^{\mu}} = 0 \text{ , } n_{CI} = 0, \quad M_{s,\max}^{(L)} = 1 \text{ , and the number of interleaver rows R = 2 as an example, PDCCH candidate \#0}$$

located in CORESET in the set of repeated PDCCH candidates uses interleaved mapping, and corresponds to CCE #0-1. The PDCCH candidate #1 located outside the CORESET uses non-interleaved mapping in the resource region outside the CORESET, and corresponds to CCE #0-1.

In this case, PDCCH candidates other than CORESET may occupy continuous frequency domain resources.

In some embodiments, the method shown in FIG. 2 further includes the following operation.

Based on the configuration information of the first CORESET and/or the number of repetitions of PDCCH transmission, the terminal device determines a resource range for repetition of PDCCH transmission.

That is, the resource range for repetition of PDCCH transmission is determined based on the configuration information of the first CORESET and/or the number of repetitions of PDCCH transmission.

Considering that a plurality of PDCCH candidates in the set of repeated PDCCH candidates occupy more REGs, it is necessary to configure a resource region having more REGs to accommodate a plurality of PDCCH candidates in the set of repeated PDCCH candidates. The embodiment of the present application provides a feasible solution for determining a resource range for repetition of PDCCH transmission, thereby better satisfying the demand for repetition of PDCCH transmission.

Specifically, for example, the terminal device determines a resource region for repetition of PDCCH transmission according to the CORESET configuration and/or the number of repetitions of PDCCH transmission.

In some embodiments, determining the resource range for repetition of PDCCH transmission based on the CORESET configuration and/or the number of repetitions of PDCCH transmission includes the following operation.

The terminal device determines a first CORESET based on the first CORESET candidate value set and the indication information of MIB.

The first CORESET candidate value set is a CORESET candidate value set where to receive the repetition of PDCCH transmission.

That is, the first CORESET is determined based on the first CORESET candidate value set and the indication information of MIB.

Here, for CORESET0, a CORESET candidate value set for repetition of PDCCH transmission is introduced, and the terminal device determines the used CORESET from the CORESET candidate value set according to the indication information of the CORESET0 configuration in MIB.

For example, for CORESET0, a CORESET candidate value set for repetition of PDCCH transmission is introduced, such as $\{N_{RB}^{CORESET}, N_{symb}^{CORESET}\} = \{\{64,3\}, \ldots, \{128,3\}\}$, and the network device instructs the terminal device to use $\{N_{RB}^{CORESET}, N_{symb}^{CORESET}\} = \{128,3\}$ through the indication information of CORESET0 configuration in the MIB, then the terminal device determines that the CORESET for repetition of PDCCH transmission has $N_{RB}^{CORESET} = 128$ RBs and $N_{symb}^{CORESET} = 3$ symbols.

An embodiment of the present application provides a scheme for determining a CORESET where to receive repetition of PDCCH transmission, and a terminal device may determine the CORESET where to receive repetition of PDCCH transmission based on a CORESET candidate value set where to receive repetition of PDCCH transmission and indication information of MIB. The embodiment of the present application introduces a CORESET candidate value set for repetition of PDCCH transmission, and the acquisition process of the first CORESET can be simplified by using the existing MIB indication information, and the standardization complexity can be reduced.

In some embodiments, the number of repetitions of PDCCH transmission is equal to the number of PDCCH candidates in the set of repeated PDCCH candidates.

That is, the number of repetitions of PDCCH transmission of one set of repeated PDCCH candidates is equal to the number of PDCCH candidates in the set of repeated PDCCH candidates.

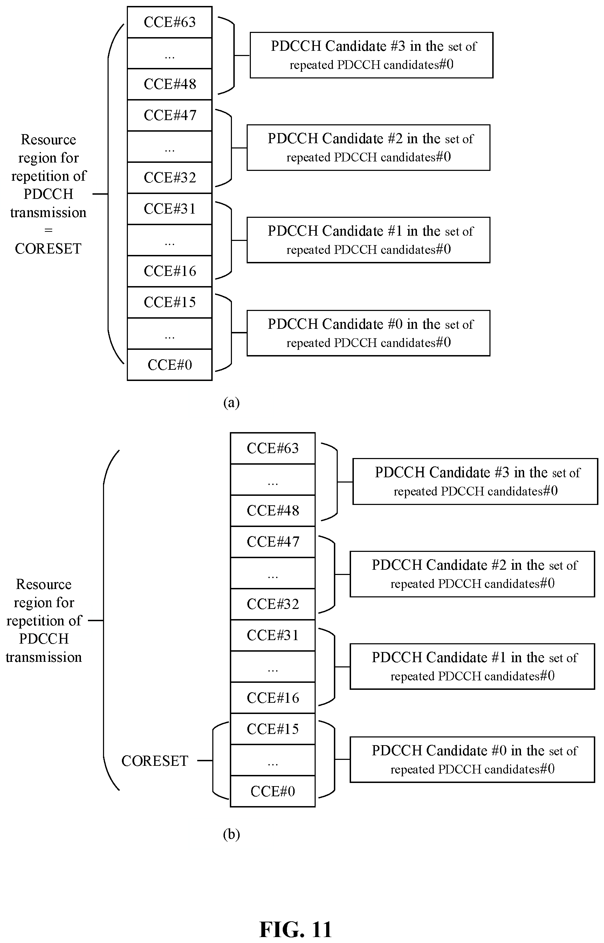

Please refer to FIG. 11, which shows a schematic diagram illustrating that a repetition of PDCCH transmission region is determined based on the CORESET configuration and the number of repetitions of PDCCH transmission, according to an exemplary embodiment of the present application.

As shown in FIG. 11 (a), for CORESET0, the current maximum allowed configuration is $N_{RB}^{CORESET} = 96$ RBs and $N_{symb}^{CORESET} = 3$ symbols, and 3 PDCCH candidates of aggregation level L = 16 can be supported. For repetition of PDCCH transmission, if the CORESET is allowed to be configured to have $N_{RB}^{CORESET} = 128$ RBs and $N_{symb}^{CORESET} = 3$ symbols, i.e. 64 CCEs, then 4 PDCCH candidates of aggregation level L = 16 can be supported.

As shown in FIG. 11 (b), if the network device configures CORESET to have $N_{RB}^{CORESET} = 32$ RBs and $N_{symb}^{CORESET} = 3$ symbols, and configures that the number of repetitions of PDCCH transmission is equal to 4, then the terminal device determines that the resource region for repetition of PDCCH transmission has $4 * N_{RB}^{CORESET} * N_{symb}^{CORESET} = 384$ 384 REGs, that is, 64 CCEs, and can support 4 PDCCH candidates of an aggregation level L = 16. One PDCCH candidate is located in CORESET, and the other three PDCCH candidates are located outside the CORESET.

In an embodiment of the present application, a scheme for obtaining the number of repetitions of PDCCH transmission is provided, and the terminal device may regard the number of PDCCH candidates in the set of repeated PDCCH candidates as the corresponding number of repetitions of PDCCH transmission to improve PDCCH coverage performance.

In some embodiments, the method shown in FIG. 2 further includes the following operation.

Based on the CORESET configuration information or the search space set configuration information, the terminal device obtains the number of repetitions of PDCCH transmission.

That is, the number of repetitions of PDCCH transmission is determined based on the CORESET configuration information or the search space set configuration information.

Herein, the number of repetitions of PDCCH transmission may be provided in the CORESET configuration information or the search space set configuration information.

For example, when the number of repetitions of PDCCH transmission is provided in the configuration information of CORESET0, the terminal device determines the corresponding number of repetitions of PDCCH transmission when receiving the configuration information of CORESET0.

For another example, when the number of repetitions of PDCCH transmission is provided in the search space set configuration information, the terminal device determines the corresponding number of repetitions of PDCCH transmission when receiving the search space set configuration information.

The embodiment of the present application provides a scheme for obtaining the number of repetitions of PDCCH transmission. The terminal device may determine the needed number of repetitions of PDCCH transmission based on CORESET configuration information or search space set configuration information. It can reduce the workload of obtaining the number of repetitions of PDCCH transmission, and provide more space for further expansion in the future.

In some embodiments, the method shown in FIG. 2 further includes the following operation.

Based on the PDCCH candidate index(es) or the starting CCE index(es) corresponding to the PDCCH candidate(s), the terminal device obtains the number of repetitions of PDCCH transmission.

That is, the number of repetitions of PDCCH transmission is associated with the PDCCH candidate index(es) or the starting CCE index(es) corresponding to the PDCCH candidate(s).

For example, candidate values of the number the repetitions of PDCCH transmission include $N_{rep}$ = {2,4}, when the PDCCH candidate index $m_{s,n_{CI}}^{(L)} \, mod \, 2 = 0$, it corresponds to $N_{rep}$ = 2; when $m_{s,n_{CI}}^{(L)} \, mod \, 2 = 1$, it corresponds to $N_{rep}$ = 4. For another example, when the starting CCE index of PDCCH candidate $(n_{cce,0}/L) mod \, 2$ = 0, it corresponds to $N_{rep}$ = 2; when $(n_{cce,0}/L) mod \, 2$ = 1, it corresponds to $N_{rep}$ = 4.

In the embodiment of the present application, a scheme for obtaining the number of repetitions of PDCCH transmission is provided, and the terminal device may determine the needed number of repetitions of PDCCH transmission based on PDCCH candidate index(es) or starting CCE index(es) corresponding to the PDCCH candidate(s). It can reduce the workload of obtaining the number of repetitions of PDCCH transmission, and provide more room for further expansion in the future.

In some embodiments, the method shown in FIG. 2 further includes the following operation.

Based on the indication information in PBCH, the terminal device determines whether to use the first CORESET candidate value set and/or the number of repetitions of PDCCH transmission.

That is, whether to use the first CORESET candidate value set and/or the number of repetitions of PDCCH transmission is determined based on the indication information in PBCH.

Herein, for CORESET0, the terminal device determines whether to use a repetition of PDCCH transmission procedure based on the indication information in PBCH, and the repetition of PDCCH transmission procedure includes at least one of: a first CORESET candidate value set or the number of repetitions of PDCCH transmission.

For example, the current PBCH information bit $\overline{a}_{\overline{A}+6}$ is a reserved bit, which can be used to indicate whether to use the repetition of PDCCH transmission procedure. For example, when $\overline{a}_{\overline{A}+6}$ = 0, it indicates that the repetition of PDCCH transmission procedure is not to be used, and when $\overline{a}_{\overline{A}+6}$ = 1, it indicates that the repetition of PDCCH transmission procedure is to be used.

The repetition of PDCCH transmission procedure includes a CORESET candidate value set and/or the number of repetitions of PDCCH transmission introduced for the repetition of PDCCH transmission.

In the embodiment of the present application, a scheme for determining whether to use the first CORESET candidate value set and the number of repetitions of PDCCH transmission is provided, and the repetition of PDCCH transmission procedure is further optimized, so that the scheme has greater flexibility.

In some embodiments, when the PDCCH received by the terminal device corresponds to one PDCCH candidate in the set of PDCCH candidates, the aggregation level of the PDCCH candidate(s) is greater than 16.

That is, if the PDCCH received by the terminal device corresponds to one PDCCH candidate in the set of PDCCH candidates, the aggregation level of the PDCCH candidate(s) is greater than 16, and the embodiment of the present application can improve the coverage performance of the PDCCH.

In this case, for the search space set s associated with the CORESET p, when the slot $n_{s,f}^{\mu}$ and the aggregation level is L > 16, such as L = 32, the terminal device determines that the CCE index(es) corresponding to the PDCCH candidate(s) $m_{s,n_{CI}}^{(L)}$ is:

$$
L \cdot \left\{ \left( Y_{p,n_{s,f}^{\mu}} + \left\lceil \frac{m_{s,n_{CI}}^{(L)} \cdot N_{\text{CCE},p}}{L \cdot M_{s,\max}^{(L)}} \right\rceil + n_{CI} \right) mod \lfloor N_{\text{CCE},p}/L \rfloor \right\} + i
$$

That is, the formula for determining the CCE index(es) corresponding to the PDCCH candidate(s) is the same as that in the case that the aggregation level is L ≤ 16.

Considering that the PDCCH candidate(s) with aggregation level L > 16 occupies more REGs, it is necessary to configure a CORESET with more REGs to accommodate the PDCCH candidate(s) with aggregation level L > 16.

In some embodiments, the method shown in FIG. 2 further includes the following operation.

The terminal device determines the second CORESET based on the second CORESET candidate value set and the indication information of MIB.

The second CORESET candidate value set is a CORESET candidate value set in which the number of CCEs is greater than 16, and the second CORESET is a CORESET in which the number of CCEs is greater than 16.

That is, the second CORESET is determined based on the second CORESET candidate value set and the indication information of MIB.

In some embodiments, for CORESET0, a CORESET candidate value set having the number of CCEs > 16 is introduced, and the terminal device determines the used CORESET from the CORESET candidate value set according to the indication information of the CORESET0 configuration in MIB.

For example, for CORESET0, a CORESET candidate value set with the number of CCEs > 16 is introduced, such as $\{N_{RB}^{CORESET}, N_{symb}^{CORESET}\} = \{\{64,3\}, \dots, \{128,3\}\}$, and the network device instructs the terminal device to use $\{N_{RB}^{CORESET}, N_{symb}^{CORESET}\} = \{128,3\}$ through the indication information of CORESET0 configuration in MIB, then the terminal device determines that the CORESET has $N_{RB}^{CORESET} = 128$ RBs and $N_{symb}^{CORESET} = 3$ symbols and supports the PDCCH candidate with aggregation level L = 64.

In the embodiment of the present application, a scheme for determining a CORESET having the number of CCEs greater than 16 is provided to support PDCCH candidate(s) with an aggregation level greater than 16, thereby improving coverage performance of the PDCCH.

In some embodiments, the method shown in FIG. 2 further includes the following operation.

Based on the indication information in PBCH, the terminal device determines whether to use the second CORESET candidate value set and/or the PDCCH with an aggregation level greater than 16.

That is, whether to use the second CORESET candidate value set and/or the PDCCH with an aggregation level greater than 16 is determined based on the indication information in PBCH.

The embodiment of the present application provides a scheme for determining whether to use the second CORESET candidate value set and PDCCH with an aggregation level greater than 16, which further optimizes the PDCCH transmission procedure, thereby reducing the workload of the scheme.

In some embodiments, the method shown in FIG. 2 further includes the following operation.

The terminal device determines the number of fifth PDCCH candidates in the set of PDCCH candidates based on the configuration information of the search space set. The fifth PDCCH candidate is a PDCCH candidate with an aggregation level greater than 16.

That is, the number of the fifth PDCCH candidate in the set of PDCCH candidates is determined based on the configuration information of the search space set.

In the embodiment of the present application, a scheme for determining the number of PDCCH candidates with an aggregation level greater than 16 is provided, and a larger aggregation level is introduced to help improve PDCCH coverage performance.

In some embodiments, the number of PDCCH candidate(s) with an aggregation level L > 16 is provided in the search space set configuration information.

For example, if the number of PDCCH candidates $M_{s,n_{CI}}^{(L)} = 4$ with an aggregation level L = 32 is provided in the configuration information of the search space set s, the terminal device determines that for the search space set s, the number of PDCCH candidates $M_{s,n_{CI}}^{(L)} = 4$ when the aggregation level is L = 32.

In the related art, the terminal device performs PDCCH reception by monitoring PDCCH candidate(s) in a set of PDCCH candidates in CORESET. The received PDCCH corresponds to one PDCCH candidate in the set of PDCCH candidates.

In order to improve the coverage performance of the PDCCH, the present application performs repetition of PDCCH transmission or introduces a larger aggregation level. In this case, in some embodiments, the terminal device performs PDCCH reception by monitoring PDCCH candidate(s) in a set of PDCCH candidates. The received PDCCH corresponds to one or more PDCCH candidate in the set of PDCCH candidates.

The technical solution of the present application provides a design scheme of PDCCH coverage enhancement, which includes that PDCCH received by a terminal device corresponds to one or more PDCCH candidates in a set of PDCCH candidates.

If the received PDCCH corresponds to a plurality of PDCCH candidates, the PDCCH coverage performance is improved by repetition of PDCCH transmission:

1) at least one PDCCH candidate is located in the CORESET, and the terminal device may determine CCE index(es) corresponding to the PDCCH candidate located in the CORESET according to the configuration information of the search space set;

2) one or more PDCCH candidates may be located outside the CORESET, and the terminal device may determine the resource position of the PDCCH candidate(s) outside the CORESET according to the resource position of the PDCCH candidate(s) in the CORESET;

3) the CORESET configuration for the repetition of PDCCH transmission and/or the number of repetitions of PDCCH transmission are provided, then the terminal device may determine the resource region for the repetition of PDCCH transmission and the number of repetitions of PDCCH transmission.

If the received PDCCH corresponds to one PDCCH candidate:

1) if the aggregation level of the PDCCH candidate is greater than 16, the PDCCH coverage performance is improved by a larger aggregation level;

2) the number of PDCCH candidates and the CORESET configuration corresponding to the aggregation level greater than 16 are provided, then the terminal device may determine the CCE index(es) corresponding to the PDCCH candidate(s) with the aggregation level greater than 16.

The technical solution of the present application is designed based on an NTN system, and can be extended to any system in which the scheme that the terminal device reports alarm information is applied.

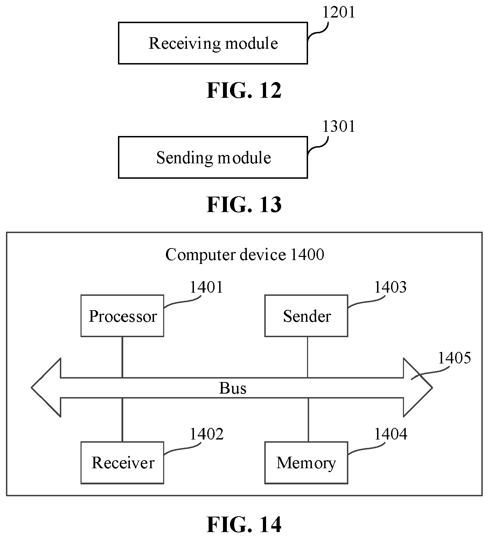

Please refer to FIG. 12, which shows a block diagram of an apparatus for receiving PDCCH according to an embodiment of the present application. The apparatus for receiving PDCCH has a function executed by the terminal device to implement the method shown in FIG. 2. As shown in FIG. 12, the apparatus may include a receiving module.

The receiving module 1201 is configured to receive PDCCH based on a set of PDCCH candidates.

The PDCCH corresponds to one PDCCH candidate or a plurality of PDCCH candidates in the set of PDCCH candidates.

In some embodiments, in a case where the PDCCH corresponds to the plurality of PDCCH candidates in the set of PDCCH candidates, the plurality of PDCCH candidates are used to perform repetition of PDCCH transmission.

In some embodiments, the receiving module 1201 is configured to perform the following operation.

In a case where the PDCCH corresponds to the plurality of PDCCH candidates in the set of PDCCH candidates, the PDCCH is received based on the set(s) of repeated PDCCH candidates.

The set(s) of repeated PDCCH candidates consists of the plurality of PDCCH candidates in the set of PDCCH candidates.

In some embodiments, at least one PDCCH candidate in the set of repeated PDCCH candidates is located in a first CORESET, and the first CORESET is a CORESET where to receive repetition of PDCCH transmission.

In some embodiments, the apparatus further comprises a first determination module, which is used to perform the following operation.

CCE index(es) corresponding to a first PDCCH candidate is determined based on configuration information of search space set.

The first PDCCH candidate is one of PDCCH candidates, located in a first CORESET, in the set of repeated PDCCH candidates.

In some embodiments, the first determination module is configured to perform the following operation.

The CCE index(es) corresponding to the first PDCCH candidate is determined based on CCE index(es) corresponding to a second PDCCH candidate.

The second PDCCH candidate is a PDCCH candidate, having a correspondence relationship with the first PDCCH candidate, in the search space set.

In some embodiments, the apparatus further comprises a second determination module, which is used to perform the following operation.

A resource position of a third PDCCH candidate is determined based on the resource position of the first PDCCH candidate.

The third PDCCH candidate is any one of PDCCH candidates, other than the first PDCCH candidate, located in the first CORESET in the set of repeated PDCCH candidates.

In some embodiments, PDCCH candidates in the set of repeated PDCCH candidates have at least one of following correspondence relationships: PDCCH candidates in the set of repeated PDCCH candidates correspond to consecutive PDCCH candidates in a search space set; PDCCH candidates in the set of repeated PDCCH candidates correspond to consecutive CCE indexes; or PDCCH candidates in the set of repeated PDCCH candidates correspond to consecutive resource positions.

In some embodiments, at least one PDCCH candidate in the set of repeated PDCCH candidates is located outside the first CORESET.

In some embodiments, the apparatus further comprises a third determination module, which is used to perform the following operation.

A resource position of a fourth PDCCH candidate is determined based on the resource position of the first PDCCH candidate.

The fourth PDCCH candidate is any one of PDCCH candidates, located outside the first CORESET, in the set of repeated PDCCH candidates.

In some embodiments, the first PDCCH candidate and the fourth PDCCH candidate use non-interleaved mapping; or the first PDCCH candidate and the fourth PDCCH candidate use interleaved mapping; or the first PDCCH candidate uses interleaved mapping, and the fourth PDCCH candidate uses non-interleaved mapping.

In some embodiments, the apparatus further comprises a fourth determination module, which is used to perform the following operation.

A resource range for repetition of PDCCH transmission is determined based on configuration information of the first CORESET and/or a number of repetitions of PDCCH transmission.

In some embodiments, the fourth determination module is configured to perform the following operation.

A first CORESET is determined based on the first CORESET candidate value set and the indication information of the MIB.

The first CORESET candidate value set is a CORESET candidate value set where to receive repetition of PDCCH transmission.

In some embodiments, the number of repetitions of PDCCH transmission is equal to a number of PDCCH candidates in the set of repeated PDCCH candidates.

In some embodiments, the apparatus further comprises a first acquisition module, which is used to perform the following operation.

The number of repetitions of PDCCH transmission is obtained based on CORESET configuration information or search space set configuration information.

In some embodiments, the apparatus further comprises a second acquisition module, which is used to perform the following operation.

The number of repetitions of PDCCH transmission is obtained based on PDCCH candidate index(es) or starting CCE index(es) corresponding to the PDCCH candidate(s).

In some embodiments, the apparatus further comprises a fifth determination module, which is used to perform the following operation.

Whether to use the first CORESET candidate value set and/or the number of repetitions of PDCCH transmission are determined based on indication information in PBCH.

In some embodiments, in a case where the PDCCH corresponds to the one PDCCH candidate in the set of PDCCH candidates, an aggregation level of the one PDCCH candidate is greater than 16.

In some embodiments, the apparatus further comprises a sixth determination module, which is used to perform the following operation.

A second CORESET is determined based on the second CORESET candidate value set and the indication information of MIB.

The second CORESET candidate value set is a CORESET candidate value set with the number of CCEs greater than 16, and the second CORESET is a CORESET with the number of CCEs greater than 16.

In some embodiments, the apparatus further comprises a seventh determination module, which is used to perform the following operation.

Based on indication information in PBCH, whether to use the second CORESET candidate value set and/or a PDCCH having an aggregation level greater than 16 is determined.

In some embodiments, the apparatus further comprises an eighth determination module, which is used to perform the following operation.

The number of fifth PDCCH candidate(s) in the set of PDCCH candidates is determined based on configuration information of search space set.

The fifth PDCCH candidate is a PDCCH candidate having an aggregation level greater than 16.

Please refer to FIG. 13, which shows a block diagram of an apparatus for sending PDCCH according to an embodiment of the present application. The apparatus for sending PDCCH has a function performed by a network device to implement the method shown in FIG. 2. As shown in FIG. 13, the apparatus may include a sending module 1301.

The sending module 1301 is configured to send PDCCH to a terminal device based on a set of PDCCH candidates. The PDCCH corresponds to one PDCCH candidate or a plurality of PDCCH candidates in the set of PDCCH candidates.

In some embodiments, in a case where the PDCCH corresponds to the plurality of PDCCH candidates in the set of PDCCH candidates, the plurality of PDCCH candidates are used to perform repetition of PDCCH transmission.

In some embodiments, in a case where the PDCCH corresponds to the plurality of PDCCH candidates in the set of PDCCH candidates, the plurality of PDCCH candidates constitute the set(s) of repeated PDCCH candidates.

In some embodiments, at least one PDCCH candidate in the set of repeated PDCCH candidates is located in a first CORESET.

The first CORESET is a CORESET where to receive repetition of PDCCH transmission.

In some embodiments, CCE index(es) corresponding to a first PDCCH candidate is determined based on configuration information of search space set.

The first PDCCH candidate is one of PDCCH candidates, located in a first CORESET, in the set of repeated PDCCH candidates.

In some embodiments, the CCE index(es) corresponding to the first PDCCH candidate is determined based on CCE index(es) corresponding to a second PDCCH candidate.

The second PDCCH candidate is a PDCCH candidate, having a correspondence relationship with the first PDCCH candidate, in the search space set.

In some embodiments, a resource position of a third PDCCH candidate is determined based on the resource position of the first PDCCH candidate.

The third PDCCH candidate is any one of PDCCH candidates, other than the first PDCCH candidate, located in the first CORESET in the set of repeated PDCCH candidates.

In some embodiments, PDCCH candidates in the set of repeated PDCCH candidates have at least one of following correspondence relationships: PDCCH candidates in the set of repeated PDCCH candidates correspond to consecutive PDCCH candidates in a search space set; PDCCH candidates in the set of repeated PDCCH candidates correspond to consecutive CCE indexes; or PDCCH candidates in the set of repeated PDCCH candidates correspond to consecutive resource positions.

In some embodiments, at least one PDCCH candidate in the set of repeated PDCCH candidates is located outside the first CORESET.

In some embodiments, a resource position of a fourth PDCCH candidate is determined based on the resource position of the first PDCCH candidate.

The fourth PDCCH candidate is any one of PDCCH candidates, located outside the first CORESET, in the set of repeated PDCCH candidates.

In some embodiments, the first PDCCH candidate and the fourth PDCCH candidate use non-interleaved mapping; or the first PDCCH candidate and the fourth PDCCH candidate use interleaved mapping; or the first PDCCH candidate uses interleaved mapping, and the fourth PDCCH candidate uses non-interleaved mapping.

In some embodiments, a resource range for repetition of PDCCH transmission is determined based on configuration information of the first CORESET and/or a number of repetitions of PDCCH transmission.

In some embodiments, the first CORESET is determined based on a first CORESET candidate value set and indication information of MIB.

The first CORESET candidate value set is a CORESET candidate value set used for repetition of PDCCH transmission.

In some embodiments, the number of repetitions of PDCCH transmission is equal to a number of PDCCH candidates in the set of repeated PDCCH candidates.

In some embodiments, the number of repetitions of PDCCH transmission is determined based on CORESET configuration information or search space set configuration information.

In some embodiments, he number of repetitions of PDCCH transmission is determined based on PDCCH candidate index(es) or starting CCE index(es) corresponding to the PDCCH candidate(s).

In some embodiments, whether to use the first CORESET candidate value set and/or the number of repetitions of PDCCH transmission is determined based on indication information in PBCH.

In some embodiments, in a case where the PDCCH corresponds to the one PDCCH candidate in the set of PDCCH candidates, an aggregation level of the one PDCCH candidate is greater than 16.

In some embodiments, a second CORESET is determined based on a second CORESET candidate value set and indication information of MIB.

The second CORESET candidate value set is a CORESET candidate value set with a number of CCEs greater than 16, and the second CORESET is a CORESET with a number of CCEs greater than 16.

In some embodiments, whether to use the second CORESET candidate value set and/or a PDCCH having an aggregation level greater than 16 is determined based on indication information in PBCH.

In some embodiments, the number of fifth PDCCH candidate(s) in the set of PDCCH candidates is determined based on configuration information of search space set.

The fifth PDCCH candidate is a PDCCH candidate having an aggregation level greater than 16.

It should be noted that, when the device provided in the above embodiment realizes its functions, only the division of each functional module described above is illustrated as an example, and in practical application, the functions described above can be allocated by different functional modules according to actual needs, that is, the content structure of the device can be divided into different functional modules to complete all or part of the functions described above.

With regard to the apparatus in the above-described embodiments, the specific manner in which the respective modules perform operations has been described in detail in the embodiments related to the method, and will not be described in detail here.

Please refer to FIG. 14, which shows a schematic structural diagram of a communication device according to an embodiment of the present application. The communication device 1400 may include a processor 1401, a receiver 1402, a sender 1403, a memory 1404, and a bus 1405.

The processor 1401 includes one or more processing cores, and executes various functional applications and information processing by running software programs and modules.

The receiver 1402 and the sender 1403 may be implemented as a communication component, which may be a communication chip. The communication chip may also be referred to as a transceiver. The memory 1404 is connected to the processor 1401 via a bus 1405. The memory 1404 may be used to store a computer program. The processor 1401 is used to execute the computer program to implement the various steps in the method embodiments described above.

Further, the memory 1404 may be implemented by any type of volatile or nonvolatile storage device, including, but not limited to, magnetic or optical disk, electrically erasable programmable read-only memory, erasable programmable read-only memory, static ready-to-access memory, read-only memory, magnetic memory, flash memory, programmable read-only memory, or a combination thereof.

In one exemplary scheme, when the communication device 1400 is implemented as the terminal device described above, the receiver 1402 and the processor 1401 execute the computer program so that the communication device implements various steps performed by the terminal device in the method shown in FIG. 2. In this case, the receiver 1402 may correspondingly implement the methods and steps implemented by the receiving module 1201 in FIG. 12, and the sender 1403 may correspondingly implement the methods and steps implemented by the sending module in FIG. 12.

In one exemplary scheme, when the communication device 1400 is implemented as the network device described above, the sender 1403 and the processor 1401 execute a computer program to cause the communication device to implement the various steps performed by the network device in the method shown in FIG. 2. In this case, the sender 1403 may correspondingly implement the methods and steps implemented by the sending module 1301 in FIG. 13, and the receiver 1402 may correspondingly implement the methods and steps implemented by the receiving module in FIG. 13.

An embodiment of the present application further provides a computer-readable storage medium, in which a computer program is stored, and the computer program is loaded and executed by a processor to implement all or part of the steps executed by a terminal device or a network device in the method shown in FIG. 2.

The present application also provides a chip for running in a communication device to cause the communication device to perform all or part of the steps performed by the terminal device or the network device in the method shown in FIG. 2.

The present application also provides a computer program product, the computer program product or computer program comprising computer instructions stored in a computer readable storage medium. The processor of the communication device reads the computer instructions from the computer-readable storage medium, and the processor executes the computer instructions to cause the communication device to perform all or part of the steps performed by the terminal device or the network device in the method shown in FIG. 2 above.

The present application also provides a computer program executed by a processor of a communication device to implement all or part of the steps executed by a terminal device or a network device in the method shown in FIG. 2.

Those skilled in the art should recognize that in one or more of the examples described above, the functions described in the embodiments of the present application may be implemented in hardware, software, firmware, or any combination thereof. When implemented using software, these functions may be stored in a computer readable medium or transmitted as one or more instructions or code on a computer readable medium. Computer-readable media include computer storage media and communication media. The communication media includes any medium that facilitates transfer of a computer program from one place to another. The storage medium may be any available medium accessible by a general-purpose or special-purpose computer.

The above are only exemplary embodiments of the present application, and are not intended to limit the present application. Any modification, equivalent substitution, improvement, etc. made within the spirit and principles of the present application should be included within the scope of protection of the present application.

**Claims**

1. A method for receiving PDCCH, wherein the method is performed by a terminal device, and the method comprises:

    receiving PDCCH based on a set of PDCCH candidates,
    wherein the PDCCH corresponds to one PDCCH candidate or a plurality of PDCCH candidates in the set of PDCCH candidates.

2. The method of claim 1, wherein in a case where the PDCCH corresponds to the plurality of PDCCH candidates in the set of PDCCH candidates, the plurality of PDCCH candidates are used to perform repetition of PDCCH transmission.

3. The method of claim 1 or 2, wherein the receiving PDCCH based on a set of PDCCH candidates comprises:

    in a case where the PDCCH corresponds to the plurality of PDCCH candidates in the set of PDCCH candidates, receiving the PDCCH based on set(s) of repeated PDCCH candidates,
    wherein the set of repeated PDCCH candidates consists of a plurality of PDCCH candidates in the set of PDCCH candidates.

4. The method of claim 3, wherein at least one PDCCH candidate in the set of repeated PDCCH candidates is located in a first CORESET, and the first CORESET is a CORESET where to receive repetition of PDCCH transmission.

5. The method of claim 4, further comprising:

    determining CCE index(es) corresponding to a first PDCCH candidate based on configuration information of search space set,
    wherein the first PDCCH candidate is one of PDCCH candidates, located in a first CORESET, in the set of repeated PDCCH candidates.

6. The method of claim 5, wherein the determining CCE index(es) corresponding to a first PDCCH candidate based on configuration information of search space set comprises:

    determining the CCE index(es) corresponding to the first PDCCH candidate based on CCE index(es) corresponding to a second PDCCH candidate,
    wherein the second PDCCH candidate is a PDCCH candidate, having a correspondence relationship with the first PDCCH candidate, in the search space set.

7. The method of claim 6, further comprising:

    determining a resource position of a third PDCCH candidate based on the resource position of the first PDCCH candidate,
    wherein the third PDCCH candidate is any one of PDCCH candidates, other than the first PDCCH candidate, located in the first CORESET in the set of repeated PDCCH candidates.

8. The method of claim 6 or 7, wherein PDCCH candidates in the set of repeated PDCCH candidates have at least one of following correspondence relationships:

PDCCH candidates in the set of repeated PDCCH candidates correspond to consecutive PDCCH candidates in a search space set;
PDCCH candidates in the set of repeated PDCCH candidates correspond to consecutive CCE indexes; or
PDCCH candidates in the set of repeated PDCCH candidates correspond to consecutive resource positions.

9. The method of any one of claims 4 to 8, wherein at least one PDCCH candidate in the set of repeated PDCCH candidates is located outside the first CORESET.

10. The method of claim 9, further comprising:

determining a resource position of a fourth PDCCH candidate based on the resource position of the first PDCCH candidate;
wherein the fourth PDCCH candidate is any one of PDCCH candidates, located outside the first CORESET, in the set of repeated PDCCH candidates.

11. The method of claim 10, wherein

the first PDCCH candidate and the fourth PDCCH candidate use non-interleaved mapping; or,
the first PDCCH candidate and the fourth PDCCH candidate use interleaved mapping; or,
the first PDCCH candidate uses interleaved mapping, and the fourth PDCCH candidate uses non-interleaved mapping.

12. The method of any one of claims 4 to 11, further comprising:
determining a resource range for repetition of PDCCH transmission based on configuration information of the first CORESET and/or a number of repetitions of PDCCH transmission.

13. The method of claim 12, wherein the determining a resource range for repetition of PDCCH transmission based on CORESET configuration and/or a number of repetitions of PDCCH transmission comprises:

determining the first CORESET based on a first CORESET candidate value set and indication information of MIB, wherein the first CORESET candidate value set is a CORESET candidate value set where to receive repetition of PDCCH transmission.

14. The method of claim 12 or 13, wherein the number of repetitions of PDCCH transmission is equal to a number of PDCCH candidates in the set of repeated PDCCH candidates.

15. The method of any one of claims 12 to 14, further comprising:
obtaining the number of repetitions of PDCCH transmission based on CORESET configuration information or search space set configuration information.

16. The method of any one of claims 12 to 15, further comprising:
obtaining the number of repetitions of PDCCH transmission based on PDCCH candidate index(es) or starting CCE index(es) corresponding to the PDCCH candidate(s).

17. The method of claim 13 or 14, further comprising:
determining whether to use the first CORESET candidate value set and/or the number of repetitions of PDCCH transmission based on indication information in PBCH.

18. The method of claim 1, wherein in a case where the PDCCH corresponds to the one PDCCH candidate in the set of PDCCH candidates, an aggregation level of the one PDCCH candidate is greater than 16.

19. The method of claim 1 or 18, further comprising:

determining a second CORESET based on a second CORESET candidate value set and indication information of MIB,
wherein the second CORESET candidate value set is a CORESET candidate value set with a number of CCEs greater than 16, and the second CORESET is a CORESET with a number of CCEs greater than 16.

**20.** The method of claim 19, further comprising:
determining, based on indication information in PBCH, whether to use the second CORESET candidate value set and/or a PDCCH having an aggregation level greater than 16.

**21.** The method of any one of claims 18 to 20, further comprising:

determining a number of fifth PDCCH candidate(s) in the set of PDCCH candidates based on configuration information of search space set,
wherein the fifth PDCCH candidate is a PDCCH candidate having an aggregation level greater than 16.

**22.** A method of transmitting PDCCH, wherein the method is performed by a network device, and the method comprises:

sending PDCCH to a terminal device based on a set of PDCCH candidates,
wherein the PDCCH corresponds to one PDCCH candidate or a plurality of PDCCH candidates in the set of PDCCH candidates.

**23.** The method of claim 22, wherein in a case where the PDCCH corresponds to the plurality of PDCCH candidates in the set of PDCCH candidates, the plurality of PDCCH candidates are used to perform repetition of PDCCH transmission.

**24.** The method of claim 22 or 23, wherein in a case where the PDCCH corresponds to the plurality of PDCCH candidates in the set of PDCCH candidates, the plurality of PDCCH candidates constitute set(s) of repeated PDCCH candidates.

**25.** The method of claim 24, wherein at least one PDCCH candidate in the set of repeated PDCCH candidates is located in a first CORESET, and the first CORESET is a CORESET where to receive repetition of PDCCH transmission.

**26.** The method of claim 25, wherein CCE index(es) corresponding to a first PDCCH candidate is determined based on configuration information of search space set;
wherein the first PDCCH candidate is one of PDCCH candidates, located in a first CORESET, in the set of repeated PDCCH candidates.

**27.** The method of claim 26, wherein the CCE index(es) corresponding to the first PDCCH candidate is determined based on CCE index(es) corresponding to a second PDCCH candidate;
wherein the second PDCCH candidate is a PDCCH candidate, having a correspondence relationship with the first PDCCH candidate, in the search space set.

**28.** The method of claim 27, wherein a resource position of a third PDCCH candidate is determined based on the resource position of the first PDCCH candidate;
wherein the third PDCCH candidate is any one of PDCCH candidates, other than the first PDCCH candidate, located in the first CORESET in the set of repeated PDCCH candidates.

**29.** The method of claim 27 or 28, wherein PDCCH candidates in the set of repeated PDCCH candidates have at least one of following correspondence relationships:

PDCCH candidates in the set of repeated PDCCH candidates correspond to consecutive PDCCH candidates in a search space set;
PDCCH candidates in the set of repeated PDCCH candidates correspond to consecutive CCE indexes; or
PDCCH candidates in the set of repeated PDCCH candidates correspond to consecutive resource positions.

**30.** The method of any one of claims 25 to 29, wherein at least one PDCCH candidate in the set of repeated PDCCH candidates is located outside the first CORESET.

**31.** The method of claim 30, wherein a resource position of a fourth PDCCH candidate is determined based on the resource position of the first PDCCH candidate;
wherein the fourth PDCCH candidate is any one of PDCCH candidates, located outside the first CORESET, in the set of repeated PDCCH candidates.

**32.** The method of claim 31, wherein,

the first PDCCH candidate and the fourth PDCCH candidate use non-interleaved mapping; or,
the first PDCCH candidate and the fourth PDCCH candidate use interleaved mapping; or,
the first PDCCH candidate uses interleaved mapping, and the fourth PDCCH candidate uses non-interleaved mapping.

33. The method of any one of claims 25 to 32, wherein a resource range for repetition of PDCCH transmission is determined based on configuration information of the first CORESET and/or a number of repetitions of PDCCH transmission.

34. The method of claim 33, wherein the first CORESET is determined based on a first CORESET candidate value set and indication information of MIB;
wherein the first CORESET candidate value set is a CORESET candidate value set used for repetition of PDCCH transmission.

35. The method of claim 33 or 34, wherein the number of repetitions of PDCCH transmission is equal to a number of PDCCH candidates in the set of repeated PDCCH candidates.

36. The method of any one of claims 33 to 35, wherein the number of repetitions of PDCCH transmission is determined based on CORESET configuration information or search space set configuration information.

37. The method of any one of claims 33 to 36, wherein the number of repetitions of PDCCH transmission is determined based on PDCCH candidate index(es) or starting CCE index(es) corresponding to the PDCCH candidate(es).

38. The method of any one of claims 34 or 35, wherein whether to use the first CORESET candidate value set and/or the number of repetitions of PDCCH transmission is determined based on indication information in PBCH.

39. The method of claim 22, wherein in a case where the PDCCH corresponds to the one PDCCH candidate in the set of PDCCH candidates, an aggregation level of the one PDCCH candidate is greater than 16.

40. The method of claim 22 or 39, wherein a second CORESET is determined based on a second CORESET candidate value set and indication information of MIB;
wherein the second CORESET candidate value set is a CORESET candidate value set with a number of CCEs greater than 16, and the second CORESET is a CORESET with a number of CCEs greater than 16.

41. The method of claim 40, wherein whether to use the second CORESET candidate value set and/or a PDCCH having an aggregation level greater than 16 is determined based on indication information in PBCH.

42. The method of any one of claims 39 to 41, wherein a number of fifth PDCCH candidate(s) in the set of PDCCH candidates is determined based on configuration information of search space set;
wherein the fifth PDCCH candidate is a PDCCH candidate having an aggregation level greater than 16.

43. An apparatus for receiving PDCCH, comprising:

a receiving module, configured to receive PDCCH based on a set of PDCCH candidates,
wherein the PDCCH corresponds to one PDCCH candidate or a plurality of PDCCH candidates in the set of PDCCH candidates.

44. An apparatus for sending PDCCH, comprising:
a sending module, configured to send PDCCH to a terminal device based on a set of PDCCH candidates, wherein the PDCCH corresponds to one PDCCH candidate or a plurality of PDCCH candidates in the set of PDCCH candidates.

45. A terminal device, comprising a processor, a memory, and a transceiver,
wherein a computer program is stored in the memory, and the processor executes the computer program to cause the terminal device to implement the method for receiving PDCCH of any one of the claims 1 to 21.

46. A network device comprising a processor, a memory, and a transceiver,
wherein a computer program is stored in the memory, and the processor executes the computer program to cause the network device to implement the method for sending PDCCH of any one of the claims 22 to 42.

47. A computer-readable storage medium, wherein a computer program is stored in the storage medium, and the computer program is used to be executed by a processor of a communication device to cause the communication device to implement the method of any one of claims 1 to 42.

48. A chip, wherein the chip comprises programmable logic circuitry and/or program instructions, and the chip is used to be executed in a communication device to cause the communication device to perform the method of any one of claims 1 to 42.

49. A computer program product, wherein the computer program product comprises computer instructions stored in a computer readable storage medium, a processor of a communication device reads the computer instructions from the computer-readable storage medium and executes the computer instructions to cause the communication device to perform the method of any one of claims 1 to 42.

50. A computer program executed by a processor of a communication device to cause the communication device to implement the method of any one of claims 1 to 42.

110

120

Uplink

Downlink

First sidelink

Second sidelink

130

**FIG. 1**

Terminal device

Network device

Step 201: the network device sends PDCCH based on the set of PDCCH candidates, and accordingly, the terminal device receives PDCCH based on the set of PDCCH candidates. The PDCCH corresponds to one PDCCH candidate or a plurality of PDCCH candidates in the set of PDCCH candidates

**FIG. 2**

Set of PDCCH candidates

PDCCH Candidate #0

PDCCH Candidate #1

PDCCH Candidate #2

PDCCH Candidate #3

Set of repeated PDCCH candidates #0

Set of repeated PDCCH candidates #1

**FIG. 3**

**FIG. 4**

CORESET

| CCE#7 |
| CCE#6 |

PDCCH Candidate #3
in the search space set s

| CCE#5 |
| CCE#4 |

PDCCH Candidate #2
in the search space set s

corresponding
to

PDCCH Candidate #1 in the set of
repeated PDCCH candidates #0

| CCE#3 |
| CCE#2 |

PDCCH Candidate #1
in the search space set s

| CCE#1 |
| CCE#0 |

PDCCH Candidate #0
in the search space set s

corresponding
to

PDCCH Candidate #0 in the set of
repeated PDCCH candidates #0

**FIG. 5**

**FIG. 6**

**FIG. 7**

| | |
|---|---|
| CCE#3 | |
| CCE#2 | PDCCH Candidate #1 in the set of repeated PDCCH candidates #0 |
| CCE#1 | |
| CCE#0 | |
| CCE#3 | |
| CCE#2 | PDCCH Candidate #0 in the set of repeated PDCCH candidates #0 |
| CCE#1 | |
| CCE#0 | |

CORESET

**FIG. 8**

| | |
|---|---|
| CCE#3 | |
| CCE#1 | Candidate PDCCH#1 in the candidate PDCCH repetition transmission set#0 |
| CCE#2 | |
| CCE#0 | |
| CCE#3 | |
| CCE#1 | Candidate PDCCH#0 in the candidate PDCCH repetition transmission set#0 |
| CCE#2 | |
| CCE#0 | |

CORESET

**FIG. 9**

| | |
|---|---|
| CCE#3 | |
| CCE#2 | PDCCH Candidate #1 in the set of repeated PDCCH candidates #0 |
| CCE#1 | |
| CCE#0 | |
| CCE#3 | |
| CCE#1 | PDCCH Candidate #0 in the set of repeated PDCCH candidates #0 |
| CCE#2 | |
| CCE#0 | |

CORESET

**FIG. 10**

Resource
region for
repetition of
PDCCH
transmission
=
CORESET

| CCE#63 |
| ... |
| CCE#48 |

PDCCH Candidate #3 in the set of repeated PDCCH candidates#0

| CCE#47 |
| ... |
| CCE#32 |

PDCCH Candidate #2 in the set of repeated PDCCH candidates#0

| CCE#31 |
| ... |
| CCE#16 |

PDCCH Candidate #1 in the set of repeated PDCCH candidates#0

| CCE#15 |
| ... |
| CCE#0 |

PDCCH Candidate #0 in the set of repeated PDCCH candidates#0

(a)

Resource
region for
repetition of
PDCCH
transmission

CORESET

| CCE#63 |
| ... |
| CCE#48 |

PDCCH Candidate #3 in the set of repeated PDCCH candidates#0

| CCE#47 |
| ... |
| CCE#32 |

PDCCH Candidate #2 in the set of repeated PDCCH candidates#0

| CCE#31 |
| ... |
| CCE#16 |

PDCCH Candidate #1 in the set of repeated PDCCH candidates#0

| CCE#15 |
| ... |
| CCE#0 |

PDCCH Candidate #0 in the set of repeated PDCCH candidates#0

(b)

**FIG. 11**

1201

Receiving module

**FIG. 12**

1301

Sending module

**FIG. 13**

Computer device 1400

1401
Processor

1403
Sender

1405
Bus

1402
Receiver

1404
Memory

**FIG. 14**

## INTERNATIONAL SEARCH REPORT

| International application No. |
| --- |
| **PCT/CN2023/139928** |

| A. | CLASSIFICATION OF SUBJECT MATTER |
| --- | --- |

H04L 5/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, VEN, ENTXT, 3GPP, CJFD, IEEE: PDCCH, 重复, 备选, 候选, 集合, CORESET, CCE, 索引, 交织, 映射, repetition, candidate, set, index, interleave, map

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 111435870 A (ZTE CORP.) 21 July 2020 (2020-07-21) description, paragraphs 0002-0108 | 1-50 |
| A | CN 115244877 A (GUANGDONG OPPO MOBILE TELECOMMUNICATIONS CORP., LTD.) 25 October 2022 (2022-10-25) entire document | 1-50 |
| A | US 2020196283 A1 (LG ELECTRONICS INC.) 18 June 2020 (2020-06-18) entire document | 1-50 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 September 2024** | **09 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/139928**

| Patent document cited in search report | | | Publication date (day/month/year) | Patent family member(s) | | | Publication date (day/month/year) |
|---|---|---|---|---|---|---|---|
| CN | 111435870 | A | 21 July 2020 | WO | 2020143286 | A1 | 16 July 2020 |
| CN | 115244877 | A | 25 October 2022 | None | | | |
| US | 2020196283 | A1 | 18 June 2020 | WO | 2018230902 | A1 | 20 December 2018 |
| | | | | US | 11096163 | B2 | 17 August 2021 |
| | | | | EP | 3641195 | A1 | 22 April 2020 |
| | | | | EP | 3641195 | A4 | 17 March 2021 |
| | | | | EP | 3641195 | B1 | 10 August 2022 |

Form PCT/ISA/210 (patent family annex) (July 2022)